# EUROPÄISCHE PATENTSCHRIFT

(11) **EP 0 923 429 B1**
(45) Veröffentlichungstag und Bekanntmachung des Hinweises auf die Patenterteilung: **17.07.2002**
(21) Anmeldenummer: 98933533.6
(22) Anmeldetag: 14.05.1998
(51) Int. Cl.: B25J 15/04

(54) **ROBOTER-SCHNELLWECHSELKUPPLUNG MIT INTEGRIERTER MEDIENDURCHFÜHRUNG**
AUTOMATIC COMPUTER-AIDED QUICK CLUTCH
SYSTEME D'EMBRAYAGE AUTOMATISE A CHANGEMENT RAPIDE ASSISTE PAR INFORMATIQUE INTEGREE

(30) Priorität: 26.05.1997 DE 19721824
(43) Veröffentlichungstag der Anmeldung: 23.06.1999
(73) Patentinhaber: IMI NORGREN Automotive GmbH, 65205 Wiesbaden (DE)
(72) Erfinder: BENZ, Martin, D-65239 Hocheim (DE)
(74) Vertreter: Quermann, Helmut, Dipl.-Ing.
(86) Internationale Anmeldenummer: DE9801344
(87) Internationale Veröffentlichungsnummer: WO9853963

(56) Entgegenhaltungen:
- EP-A- 0 068 769
- DE-U- 8 910 098
- US-A- 4 520 550
- US-A- 4 650 388

## Beschreibung

Die Erfindung betrifft eine Roboter-Schnellwechselkupplung mit integrierter Mediendurchführung. Eine derartige Kupplung bildet die Verbindung zwischen einem Roboter und den von diesem aufgenommenen Werkzeugen. So ist beispielsweise ein Kupplungsteil mit einem Roboterarm verbunden, während das andere, mit dem erstgenannten Kupplungsteil verbindbare Kupplungsteil, ein Tragrohr aufnimmt, an dem weitere Tragrohre angeflanscht sein können, die jeweils die Werkzeuge aufnehmen. Bei den Werkzeugen kann es sich beispielsweise um solche handeln, die insbesondere in der Kraftfahrzeugfertigung Verwendung finden, beispielsweise Vakuumsauger, Greifer, Schweißzangen, Klebepistolen, Nietzangen und sonstige Halteelemente und dergleichen. Diese Werkzeuge werden insbesondere pneumatisch beaufschlagt, weshalb die Kupplung mit einer integrierten Mediendurchführung versehen ist. Beim Verbinden der beiden Kupplungsteile wird damit nicht nur eine feste Verbindung zwischen dem Roboter und dem bzw. den Werkzeugen hergestellt, sondern gleichzeitig auch die Verbindung der das Medien, insbesondere die Druckluft führenden Anschlüsse, die in den Kupplungen gelagert sind.

Bekannt ist aus der Praxis eine Roboter-Schnellwechselkupplung mit integrierter Mediendurchführung, wobei die Kupplung ein roboterseitiges Kupplungsteil und ein werkzeugseitiges Kupplungsteil aufweist, die miteinander verbindbar sind, sowie eines der Kupplungsteile mit einem Zentrierrohr versehen ist, das in eine Ausnehmung des anderen Kupplungsteiles einsteckbar ist, ferner mit einer Betätigungsvorrichtung zum Betätigen der Kupplung, wobei die Betätigungsvorrichtung in einem der Kupplungsteile gelagert und in Wirkverbindung mit mindestens einem mit dem anderen Kupplungsteil verbundenen Gegenlager bringbar ist, sowie das Zentrierrohr mit einem Federelement versehen ist, das bei geschlossener Kupplung das andere Kupplungsteil kontaktiert.

Bei dieser Roboter-Schnellwechselkupplung weist das roboterseitige Kupplungsteil die als Durchgangsbohrung ausgebildete Ausnehmung für das am werkzeugseitigen Kupplungsteil befestigte Zentrierrohr auf. Dieses Zentrierrohr weist keine Führung im roboterseitigen Kupplungsteil über dessen Umfang auf, sondern ist im Bereich seines freien Endes mit einem elastischen Federelement aus Kunststoff versehen, das im Bereich seines freien Endes konisch ausgebildet ist und sich an einem konisch gestalteten Abschnitt der Ausnehmung des roboterseitigen Kupplungsteiles beim Verbinden der beiden Kupplungsteile abstützt. Auf den gegenüberliegenden Seiten ist das werkzeugseitige Kupplungsteil mit Gegenlagern versehen, die als Bolzen ausgebildet sind. Entsprechend ist im Bereich gegenüberliegender Seiten des roboterseitigen Kupplungsteiles ein Spannhebel schwenkbar gelagert, der mit beidseits dieses Kupplungsteils angeordneten Zughaken zusammenwirkt, die in der geöffneten Stellung des Spannhebels und in das roboterseitige Kupplungsteil eingestecktem Zentrierrohr mit ihren Hakenbereichen neben den Lagerbolzen positioniert sind und beim Schwenken des Spannhebels diese hintergreifen und zusammen mit dem werkzeugseitigen Kupplungsteil und dem Zentrierrohr in Richtung des roboterseitigen Kupplungsteiles ziehen. Hierbei wird das elastische Federelement zusammengedrückt und über dieses sowohl die Zentrierung, damit auch die Führung des Zentrierrohrs im roboterseitigen Kupplungsteil bzw. der beiden Kupplungsteile zueinander, als auch die Vorspannung zwischen den beiden Kupplungsteilen, die der durch die Betätigungsvorrichtung einwirkenden Schließkraft entgegengesetzt ist und auch beim späteren Öffnen der Kupplung diesen Vorgang unterstützt, bewirkt. Bei der bekannten Kupplung ist der Betätigungshebel auf Achsen schwenkbar gelagert, die ausschließlich im Gehäuse des roboterseitigen Kupplungsteiles gelagert sind, nicht aber dessen Ausnehmung durchsetzen. Bei dieser Kupplung erfolgt die Mediendurchführung, somit die Durchführung der Pneumatikschläuche vom Roboter zu den Werkzeugen durch die Kupplung hindurch, somit durch die durchgehende Ausnehmung im roboterseitigen Kupplungsteil, ferner durch das Zentrierrohr und die Ausnehmung im werkzeugseitigen Kupplungsteil. Bei geschlossenem Spannhebel ist dieser über einen Totpunkt hinausbewegt, so daß eine sichere Verbindung der beiden Kupplungsteile gewährleistet ist, die nur durch Schwenken des Spannhebels in Öffnungsrichtung aufgehoben werden kann.

Ein wesentlicher Nachteil ist bei der aus der Praxis bekannten Roboter-Schnellwechselkupplung darin zu sehen, daß die Zentrierung der beiden Kupplungsteile zueinander mittels des elastischen Federelementes erfolgt, das dort als Vulkulanring ausgebildet ist. Dies bedingt eine geringe Genauigkeit hinsichtlich der Positionierung der beiden Kupplungsteile zueinander aufgrund der Toleranz und Dynamik im Konus des Federelementes. Deshalb wird ein hoher Spanndruck benötigt, um die Kupplung zu schließen. Das Führen und Schließen der Kupplung ist damit nicht entkoppelt. Abgesehen hiervon gestattet die Ausbildung der Betätigungsvorrichtung mit den Spannhaken kein kontinuierliches Zusammenführen der beiden Kupplungsteile. Nachteilig ist des weiteren, daß beim Öffnen der Kupplung das Trennen der beiden Kupplungsteile nicht gezielt mittels der Betätigungsvorrichtung erfolgt. Gerade beim lang andauernden Kuppeln ist eine relativ feste Verbindung der beiden Kupplungsteile zu verzeichnen, so daß das Trennen der beiden Kupplungsteile unter Umständen erst dann erfolgen kann, wenn mittels eines externen Werkzeuges, beispielsweise eines Gummihammers, die Verbindung gelockert wird. Die Mediendurchführung innerhalb der Kupplung bedingt den Nachteil, daß bei miteinander verbundenen Kupplungsteilen nachträglich keine zusätzlichen Leitungen für Medien ergänzt werden können.

Eine Werkzeugwechselvorrichtung für Industrieroboter ist ferner aus der DE 38 12 527 A bekannt. Bei dieser ist ein mit einem Kupplungsteil verbundenes Zentrierrohr über dessen Umfang im anderen Kupplungsteil radial spielarm gelagert. Bei dieser Vorrichtung weist die Betätigungsvorrichtung zum Betätigen der Kupplung einen Spannhaken auf, der ausschließlich als Verriegelung wirkt. Insofern sind dieselben Nachteile zu verzeichnen, wie bei der aus der Praxis bekannten Roboter-Schnellwechselkupplung.

Es ist Aufgabe der vorliegenden Erfindung, eine Roboter-Schnellwechselkupplung mit integrierter Mediendurchführung zu schaffen, bei der eine steife Verbindung der beiden Kupplungsteile geschaffen wird und das Schließen der Kupplung kontinuierlich bei geringem Spanndruck sowie das Trennen der Kupplungsteile gezielt mittels der Betätigungsvorrichtung bewerkstelligt werden kann.

Gelöst wird die Aufgabe durch eine Roboter-Schnellwechselkupplung nach Patentanspruch 1.

Wesentlich ist bei der Erfindung zunächst, daß die Betätigungsvorrichtung Kurven aufweist, die in Wirkverbindung mit dem Gegenlager bringbar sind. Beim losen Einstecken des Zentrierrohres in das andere Kupplungsteil kann durch Schwenken der Betätigungsvorrichtung die eine Kurve in Hintergriff zum Gegenlager gebracht werden, so daß beim weiteren Schwenken der Betätigungsvorrichtung das Gegenlager entsprechend der gewählten Steigung der Kurve senkrecht zur Kurve bewegt wird und dies zu einer weiteren Annäherung der beiden Kupplungsteile führt, bis sie in ihre gewünschte Schließposition geführt sind. Es erfolgt damit ein koninuierliches Heranfahren des anderen Kupplungsteiles über die Kurve, im Gegensatz zum Stand der Technik, wo erst kurz vor Erreichen der Endstellung des Spannhebels die diesem zugeordneten Haken das entsprechende Kupplungsteil heranziehen. Bei der erfindungsgemäßen Betätigungsvorrichtung unter Verwendung der Kurve wird das Schließen der Kupplung bei geringer Spannkraft bewerkstelligt. Die Gestaltung der Kupplung dahingehend, daß das Zentrierrohr über dessen Umfang im anderen Kupplungsteil radial spielarm gelagert ist, somit einen Zusammenfügen von Zentrierelement und anderem Kupplungsteil bei minimalem Spalt erlaubt, bewirkt, daß das Führen der beiden Kupplungsteile ineinander und deren Schließen entkoppelt ist. Die Führung der beiden Kupplungsteile erfolgt ausschließlich über den Umfang des Zentrierrohres, das radial spielarm im anderen Kupplungsteil gelagert ist. Die Führungsgenauigkeit hängt damit nicht von einem elastischen Bauteil ab, sondern ergibt sich aufgrund der Bearbeitungsgenauigkeit der die Führung bewerkstelligenden Bauteile. In diesem Zusammenhang wird es als besonders vorteilhaft angesehen, wenn das metallische Zentrierrohr mit in die Ausnehmung des anderen Kupplungsteiles eingebrachten Zentrierringen zusammenwirkt, wobei diese aus Gleitmaterial bestehen, beispielsweise Bronze oder Kunststoff. Bei der erfindungsgemäßen Kupplung kommt dem Federelement somit nur die Aufgabe zu, das Zentrierrohr in Öffnungsrichtung der Kupplung vorzuspannen. Das Trennen der beiden Kupplungsteile erfolgt aufgrund der beim Betätigen der Betätigungsvorrichtung in Öffnungsrichtung der Kupplung mit dem Gegenlager in Kontakt gelangenden anderen Kurve, die aufgrund deren Steigung über das Gegenlager die beiden Kupplungsteile auseinanderdrückt. Zum Trennen der beiden Kupplungsteile sind damit keine externen Werkzeuge erforderlich. Das Trennen erfolgt kontinuierlich in Art des Schließens der Kupplung.

Vorzugsweise weist die Betätigungsvorrichtung zwei Kurvenscheiben auf, die auf gegenüberliegenden Seiten des einen Kupplungsteiles angeordnet und in einer gemeinsamen Welle drehfest gelagert sind, wobei die Welle das eine Kupplungsteil durchsetzt, sowie das in Wirkverbindung mit der jeweiligen Kurvenscheibe bringbare Gegenlager als Rolle ausgebildet ist. Diese Ausbildung mit zwei gegenüberliegenden Kraftangriffspunkten ermöglicht ein verkantungsfreies Zusammenführen und Trennen der beiden Kupplungsteile, wobei wegen der drehfesten Lagerung der beiden Kurvenscheiben in der Welle es nur der Betätigung einer Kurvenscheibe bedarf. Diese kann beispielsweise mit einem radial angeordneten Betätigungsgriff zum Schwenken der Scheibe verbunden sein. Es ist aber gleichfalls denkbar, die Kurvenscheibe oder die Welle motorisch anzusteuern. Vorzugsweise erstreckt sind die Kurve über einen Schwenkwinkel von mehr als 135°. Um sicherzustellen, daß die Kurvenscheibe in der Schließstellung der Kupplung nicht ungewollt schwenkt und damit unter der Vorspannung des Federelementes die Kupplung geöffnet wird, weist die jeweilige Kurvenscheibe einen Hinterschnitt auf, den das jeweilige Gegenlager in der Schließstellung der Kupplung kontaktiert.

Die Zentrierung des Zentrierrohres im anderen Kupplungsteil erfolgt mittels zumindest im vorderen und hinteren Bereich des Zentrierrohres wirksamer Zentrierringe. Es ist damit sichergestellt, daß die Führung des Zentrierrohres im anderen Kupplungsteil im Bereich dessen Ausnehmung über eine große Länge des Zentrierrohres erfolgt.

Das Federelement kann im erfindungsgemäßen Sinne beliebig ausgestaltet sein, sofern es komprimierbar ist. Es kann sich beispielsweise um ein elastisches Bauteil aus Kunststoff, insbesondere einen Vulkulanring, ferner um ein Gummielement, eine metallische Tellerfeder, oder einen fluidbetätigbaren Kolben handeln. Dieser wird zwischen dem Zentrierrohr und dem anderen Kupplungsteil plaziert und beispielsweise mit Preßluft beaufschlagt. Eine besonders einfache Gestaltung sieht vor, daß das Federelement als elastisches Bauteil ausgebildet ist, das im freien Ende des Zentrierrohres gelagert ist, wobei das in Wirkverbindung mit dem anderen Kupplungsteil bringbare Ende des Federelementes konisch verjüngend ausgebildet ist. Die konische Gestaltung des Federelementes hat den Vorteil, daß sich dessen Steifigkeit mit der Zustellbewegung der beiden Kupplungsteile erhöht.

Gemäß einer besonderen Ausführungsform der Erfindung ist vorgesehen, daß jedes Kupplungsteil einen Kupplungsflansch aufweist. In dem jeweiligen Kupplungsflansch können unterschiedliche Bauteile montiert werden, die die Funktionalität der Kupplung erhöhen und/oder der Mediendurchführung dienen. So dient beispielsweise der Kupplungsflansch des einen Kupplungsteils der Aufnahme eines oder mehrerer Zentrierstifte, die beim Verbinden der beiden Kupplungsteile in Ausnehmungen des Kupplungsflansches des anderen Kupplungsteiles eingreifen. Hinsichtlich der Fluidanschlüsse ist insbesondere vorgesehen, daß der Kupplungsflansch des einen Kupplungsteiles der Aufnahme eines oder mehrerer Fluidanschlüsse, insbesondere Druckluftanschlüsse dient, die beim Verbinden der beiden Kupplungsteile in Wirkverbindung mit komplementären Anschlußelementen bringbar sind, die mit dem Kupplungsflansch des anderen Kupplungsteiles verbunden sind. Schließlich ist es auch denkbar, daß der Kupplungsflansch des einen Kupplungsteiles der Aufnahme eines oder mehrerer Elektroanschlüsse dient, die beim Verbinden der beiden Kupplungsteile in Wirkverbindung mit komplementären Anschlußelementen bringbar sind, die mit dem Kupplungsflansch des anderen Kupplungsteiles verbunden sind. - Die erfindungsgemäße Kupplung ist demnach zur integrierten Durchführung der unterschiedlichsten Medien geeignet, beispielsweise von Wasser, Luft, sei es Luft mit Über- oder Unterdruck, elektrischer Spannung, beispielsweise als Steuerspannung oder Arbeitsspannung zum Schweißen.

Zum Erfassen der Schaltposition der Kupplung kann diese mit einer Fernabfrage versehen sein. Diese kann beispielsweise elektrisch erfolgen und erfassen, ob die Verriegelung der Kupplungsteile geöffnet oder geschlossen ist.

Gemäß einer konkreten Ausgestaltung der Erfindung ist schließlich vorgesehen, daß die Betätigungsvorrichtung und das Zentrierrohr mit dem roboterseitigen Kupplungsteil verbunden sind. Bevorzugt weist das werkzeugseitige Kupplungsteil des weiteren eine Spannvorrichtung auf. Diese dient dem Verbinden eines Tragrohres mit diesem Kupplungsteil. Das Tragrohr stellt beispielsweise die Verbindung zu einer Spinne dar, die diverse Werkzeuge aufnimmt. Das Tragrohr kann aus leitendem oder nichtleitendem Material bestehen. Bezüglich des nichtleitenden Materials ist insbesondere an Glasfieber oder eine Karbonfaser gedacht.

Weitere Merkmale der Erfindung sind in der Beschreibung der Figuren und den Figuren selbst dargestellt.

In den Figuren ist die Erfindung anhand eines Ausführungsbeispieles dargestellt, ohne auf dieses beschränkt zu sein. Es stellt dar:

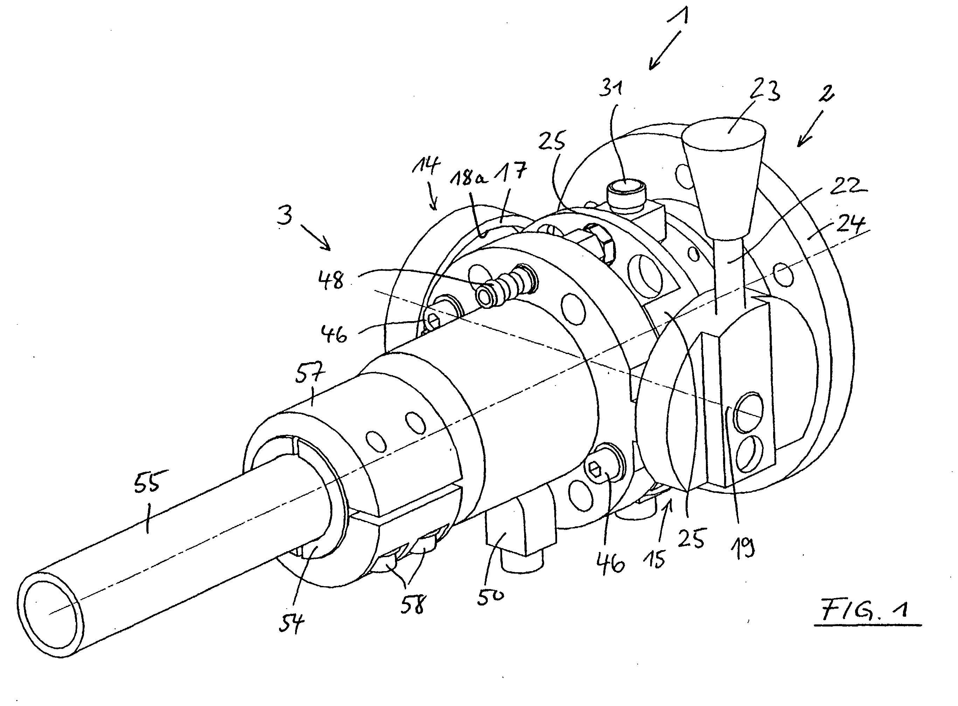

- Figur 1: eine räumliche Ansicht der Roboter-Schnellwechselkupplung mit integrierter Mediendurchführung,
- Figur 2: eine Explosionsdarstellung der in Figur 1 gezeigten Kupplung,
- Figur 3: eine Seitenansicht der in Figur 1 gezeigte Kupplung, teilweise im Schnitt, und
- Figur 4: einen waagerechten Schnitt durch die in Figur 1 gezeigte Kupplung.

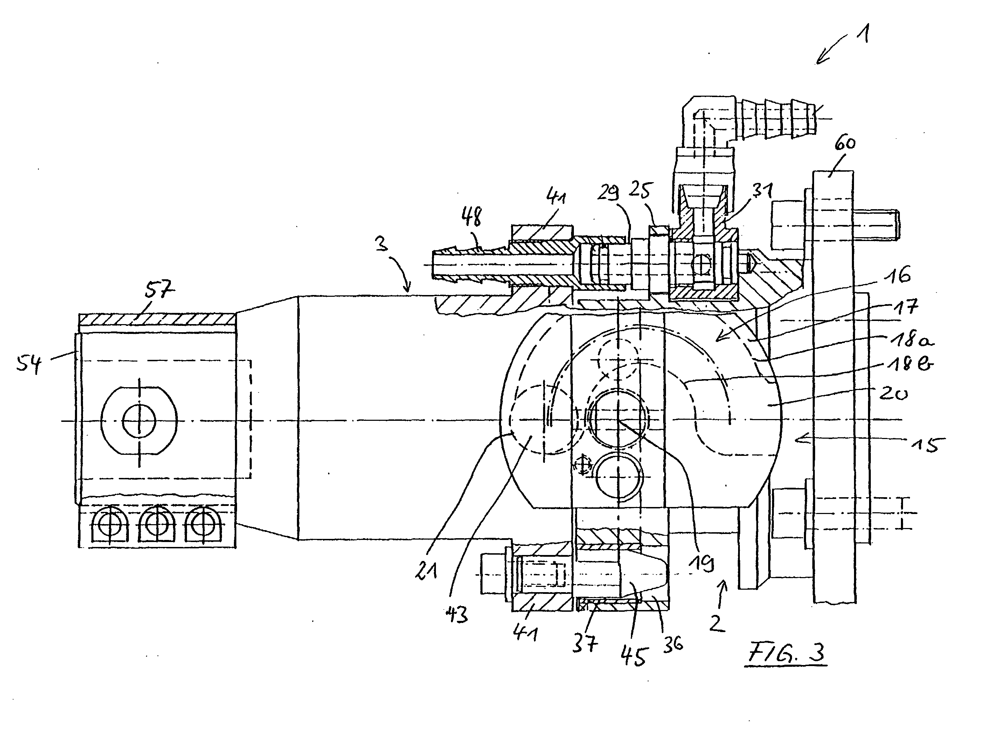

Die in den Figuren gezeigte Roboter-Schnellwechselkupplung 1 mit integrierter Mediendurchführung weist ein roboterseitiges Kupplungsteil 2 und ein werkzeugseitiges Kupplungsteil 3 auf, die miteinander verbindbar sind. Das Kupplungsteil 2 weist eine Durchgangsbohrung 4 auf. Das Kupplungsteil 3 ist mit einer rotationssymmetrischen Ausnehmung 5 mit Boden 59 versehen. In die Durchgangsbohrung 4 des Kupplungsteiles 2 ist ein Zentrierrohr 6 eingepreßt, das sich auf seiner dem Kupplungsteil 3 abgewandten Seite an einem umlaufenden Bund 7 des Kupplungsteiles 2 abstützt. Über die halbe Länge des Zentrierrohres 6 weist dieses in seinem in das Kupplungsteil 2 eingepreßten Bereich einen relativ großen Durchmesser auf, dieser Durchmesserabschnitt 8 des Zentrierrohres setzt sich aus dem Kupplungsteil 2 hinaus fort und mündet in einen Bereich 9 geringeren Durchmessers, an den sich ein weiter verjüngter Durchmesserbereich 10 des Zentrierrohres 6 anschließt, der im Bereich des freien Endes des Zentrierrohres 6 positioniert ist. Das Kupplungsteil 2 ist mit fluchtenden Durchgangsbohrungen 11 versehen, die mit Bohrungen 12 im Zentrierrohr 6 fluchten. Die Bohrungen 11 und 12 durchsetzt eine Welle 13, mit der eine Betätigungsvorrichtung verbunden ist, die zwei Kurvenscheiben 14 und 15 aufweist, die auf gegenüberliegenden Seiten des Kupplungsteiles 2 in der Welle drehfest gelagert sind. Jede Kurvenscheibe 14 bzw. 15 weist eine Kurvennut 16 auf. Außen ist die Kurvennut 16 durch einen Steg 17 der Kurvenscheibe 14 bzw. 15 gebildet, deren Innenkontur eine erste Kurve 18a bildet. Die innere Begrenzung der Kurvennut 16 bildet eine zweite Kurve 18b. Die Kurven 18a und 18b erstrecken sich über einen Schwenkwinkel von beispielsweise 150° um die Mittellängsachse 19 der Welle 13 über einen sich mit dem Bogen verringernden Radius. Im Bereich des größten Radius weist die Kurvenut 16 eine sich radial erstrekkende Öffnung 20 auf. Wie insbesondere der Darstellung der Figur 3 zu entnehmen ist, ist das der Öffnung 20 abgewandte Ende der Kurvennut 16 mit einer radial nach außen gerichteten Hinterfräsung 21 versehen. Mit der Kurvenscheibe 15 ist ein sich radial erstreckender Betätigungshebel 22 mit Griff 23 verbunden. In die Kurvenscheibe 15 ist ein Rastbolzen 24 eingesetzt, der diese Kurvenscheibe und damit die Betätigungsvorrichtung in ihrer geöffneten Stellung rastiert.

Das roboterseitige Kupplungsteil 2 weist einen Kupplungsflansch 60 auf, der der Befestigung dieses Kupplungsteiles 2 am Roboter dient. Benachbart dem werkzeugseitigen Kupplungsteil 3 ist das roboterseitige Kupplungsteil 2 ferner mit einem weiteren Flansch 25 versehen, der der roboterseitigen Aufnahme der Bauelemente für die Mediendurchführung und im übrigen weiterer Fixierelemente für die beiden Kupplungsteile 2 und 3 dient. So weist der Flansch 25 im Bereich eines ersten Rücksprunges 28 mehrere Bohrungen 26 auf, wobei mit einer der Bohrungen 26 die Bauelemente für den Pneumatikanschluß zum Kupplungsteil 2 verschraubt sind, nämlich von dem dem werkzeugseitigen Kupplungsteil 3 zugewandten Seite eine Luftkupplung 29 mit O-Ring 30 in die Bohrung 26 eingesetzt ist und von der anderen Seite mit der Luftkupplung 29 eine Winkelverschraubung 31 mit Dichtung 32 verschraubt ist. Entsprechend weist der Flansch 25 einen weiteren Rücksprung 28 auf, mit mehreren Bohrungen 27, wobei im Bereich einer dieser Bohrungen 27 ein Elektro-Kupplungsgehäuse 33 mit einer Elektro-Kupplung 34 verschraubt ist. Schließlich weist der Flansch 25 in dem Bereich, in dem er keinen Rücksprung aufweist, zwei parallel zur Längsachse 35 der Kupplung angeordnete Bohrungen 36 auf, in die Buchsen 37 eingesetzt sind.

Das Zentrierrohr 6 ist vorne, das heißt dort, wo es den geringsten Durchmesser aufweist, mit einem ringförmigen Federelement 38 versehen, das beispielsweise aus Vulkulan besteht. Das Federelement liegt an einer Scheibe 39 an und ragt im Bereich seines konischen Abschnittes aus dem Zentrierrohr 6. Gehalten sind das Federelement 38 und die Scheibe 39 zwischen zwei Sicherungsringen 40, die in Innennuten des Zentrierrohres 6 eingesetzt sind.

Das werkzeugseitige Kupplungsteil 3 weist auf seiner dem roboterseitigen Kupplungsteil 2 zugewandten Seite einen Flansch 41 auf. Auf den Umfang des Flansches bezogen sind diametral in diesen zwei Lagerbolzen 42 eingesetzt, die Rollen 43 aufnehmen. Diese dienen dem Eingriff in die Kurvenscheiben 14 bzw. 15, wobei der Durchmesser der Rollen 43 geringfügig geringer ist als die Breite der jeweiligen Kurvennut 16. Der Flansch 41 des werkzeugseitigen Kupplungsteiles 3 weist ferner diverse Bohrungen zur Aufnahme der diesem Kupplungsteil zugeordneten Bauteile der Mediendurchführung sowie von Bauteilen für die Zentrierung der beiden Kupplungsteile 2 und 3 auf. In zwei bezüglich der Längsachse 35 der Kupplung diametrale Bohrungen 44 sind Zentrierstifte 45 eingesteckt und mit Schrauben 46 befestigt, wobei diese beiden Zentrierstifte 45 beim Verbinden der beiden Kupplungsteile 2 und 3 in die Buchsen 37 des roboterseitigen Kupplungsteiles 2 eingreifen. In eine weitere Bohrung 47 des Flansches 41 ist ein Stecknippel 48 eingeschraubt, das beim Verbinden der beiden Kupplungsteile 2 und 3 mit der Luftkupplung 29 verbunden wird. Schließlich ist in eine Bohrung 49 des Flansches 41 ein Steckergehäuse 50 eingesteckt, das mit einem Elektrostecker 51 verbunden wird. Beim Verbinden der beiden Kupplungsteile 2 und 3 kontaktieren der Elektrostecker 51 und die Elektrokupplung 34.

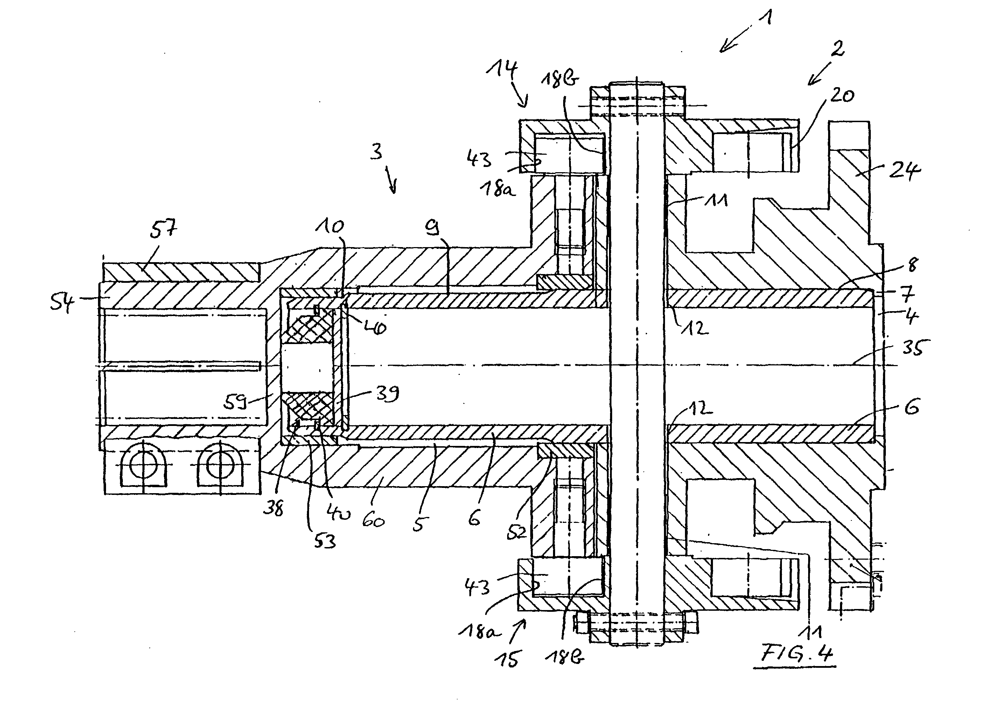

Wie insbesondere der Darstellung der Figur 4 zu entnehmen ist, ist das werkzeugseitige Kupplungsteil 3 im Bereich seiner Ausnehmung 5 vorn und hinten mit Zentrierringen 52 und 53 versehen, deren Innendurchmesser auf die Außendurchmesser des Zentrierrohres in deren Bereichen 8 und 10 abgestimmt sind. Die beiden Zentrierringe bestehen beispielsweise aus Bronze.

Das dem roboterseitigen Kupplungsteil 2 abgewandte Ende des werkzeugseitigen Kupplungsteiles 3 ist als Kupplungshülse 54 ausgebildet, die diametral geschlitzt ausgebildet ist. In die Hülse 54 wird ein Tragrohr 55 eingesteckt, das die Werkzeuge, zum Beispiel Saugnäpfe unmittelbar aufnimmt oder aber mittelbar, indem es die Verbindung zu einer die Werkzeuge aufnehmenden Spinne darstellt. Auf die Kupplungshülse 54 ist eine mit einem Schlitz 56 versehene Klemmhülse 27 aufgesteckt, die mittels Schrauben 58 festgezogen werden kann.

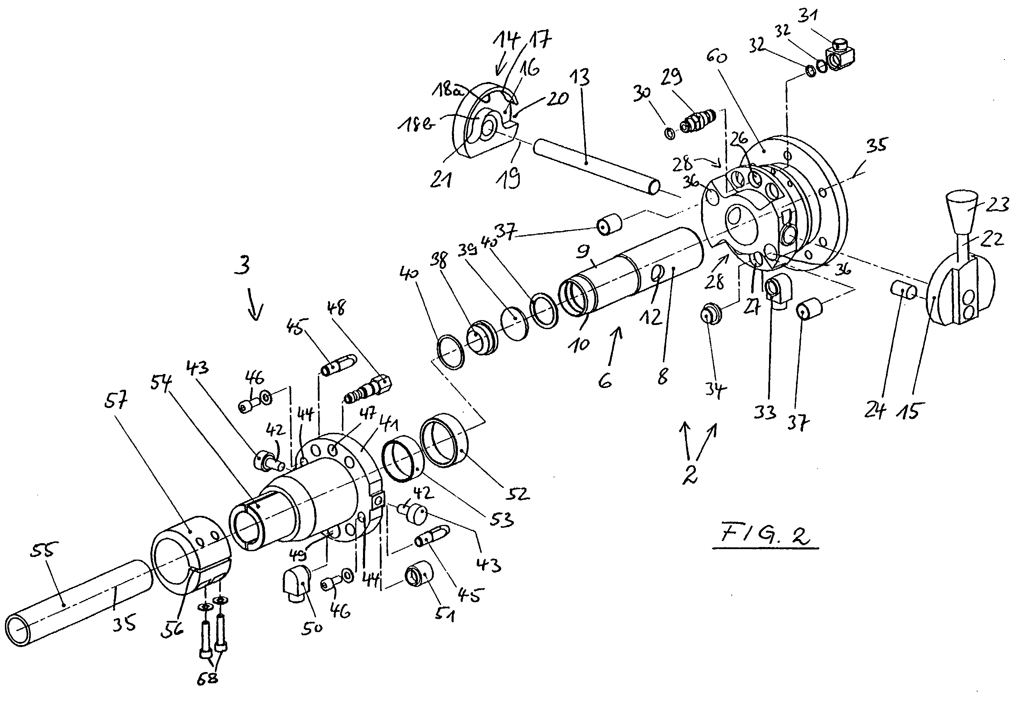

In den Figuren sind die die Verbindung der beiden Kupplungsteile 2 und 3 bewirkenden Bauteile in ihrer Position gezeigt, die sie bei geschlossener Kupplung einnehmen. Sollen die voneinander getrennten Kupplungsteile 2 und 3 miteinander verbunden werden, werden, ausgehend von einer Position der Kurvenscheiben 14 und 15, in der die jeweilige Öffnung 20 der Kurvenscheibe 14 bzw. 15 der zugeordneten Rolle 43 zugewandt ist (somit bei in Figur 2 nach unten zeigendem Griff 23), die beiden Kupplungsteile 2 und 3 aufeinander zu bewegt. Hierbei werden das Zentrierrohr 6 des roboterseitigen Kupplungsteiles 2 in die Bohrung 5 des werkzeugseitigen Kupplungsteiles 2, die beiden Zentrierstifte 45 mit ihren vorderen konusförmigen Bereichen in die Buchsen 37 und die beiden Rollen 43 in die Öffnungen 20 der Kurvenscheiben 14 und 15 eingeführt. In dieser Position der Rollen 43 ist das vordere Ende des Federelementes 38 in geringem Abstand zum Boden 59 des Kupplungsgehäuses 60 positioniert. Das Zentrierrohr 6 ist mit minimalem Spiel in den in relativ großem Abstand zueinander angeordneten, im Kupplungsgehäuse 30 gelagerten Zentrierringen 52 und 53 gelagert. Auch die Bauteile der Mediendurchführung, somit der Stecknippel 48 und die Luftkupplung 29 sowie Elektrostecker 51 und Elektrokupplung 34 befinden sich in weitgehend angenäherter Position. Werden nunmehr durch Betätigen des Griffes 23 die beiden Kurvenscheiben 14 und 15 geschwenkt, laufen die Rollen 43 auf der Kurve 18a des Steges 17 der jeweiligen Kurvenscheibe ab und werden wegen des sich über den Kurvenweg stetig verringernden Abstandes der Kurve von der Mittellängsachse 19 der Welle 13 in Richtung der Mittellängsachse 19 gezogen. Dies bedeutet, daß kontinuierlich mit dem Schwenken der Kurvenscheiben 14 und 15 die beiden Kupplungsteile 2 und 3 weiter angenähert werden, wobei das Federelement 38 den Boden 59 des Kupplungsgehäuses 60 kontaktiert und während der Annäherungsbewegung der beiden Kupplungsteile stetig komprimiert wird. In der Kupplungsstellung der beiden Kupplungsteile 2 und 3 ist die jeweilige Rolle 43 im Bereich der Hinterfräsung 21 der zugeordneten Kurvenscheibe 14 bzw. 15 angeordnet, womit es nicht weiter erforderlich ist, die Kurvenscheiben 14 und 15 manuell zu beaufschlagen, um die Kupplungsposition aufrechtzuerhalten. In dieser gekuppelten Position der beiden Kupplungsteile 2 und 3 sind dann auch die die Mediendurchführung bewirkenden Elemente in ihre Kontakt- bzw. Verbindungsposition bewegt. Das Öffnen der Kupplung erfolgt in entgegengesetztem Bewegungsablauf, nachdem die Öffnungsbewegung wieder manuell über den Griff 23 eingeleitet worden ist. Beim Öffnen der Kupplung drückt die jeweilige innere Kurve 18b die zugeordnete Rolle 43 radial nach außen und damit die beiden Kupplungsteile 2 und 3 auseinander.

Anhand des vorstehenden Ausführungsbeispieles ist die integrierte Mediendurchführung für pneumatisches und elektrisches Medium veranschaulicht. Im vorgenannten Sinne könnten weitere Mediendurchführungen in die Kupplung integriert werden, wofür es nur erforderlich ist, diese in den weiteren Bohrungen der Flansche 25 und 41 von roboterseitigem Kupplungsteil 2 und werkzeugseitigem Kupplungsteil 3 zu positionieren.

## Patentansprüche

1. Roboter-Schnellwechselkupplung (1) mit integrierter Mediendurchführung, wobei die Kupplung (1) ein roboterseitiges Kupplungsteil (2) und ein werkzeugseitiges Kupplungsteil (3) aufweist, die miteinander verbindbar sind, sowie eines der Kupplungsteile (2) mit einem Zentrierrohr (6) versehen ist, das in eine Ausnehmung (5) des anderen Kupplungsteils (3) einsteckbar ist, ferner mit einer Betätigungsvorrichtung (14, 15) zum Betätigen der Kupplung (1), wobei die Betätigungsvorrichtung (14, 15) in einem der Kupplungsteile (2) gelagert und in Wirkverbindung mit mindestens einem mit dem anderen Kupplungsteil (3) verbundenen Gegenlager (43) bringbar ist, sowie das Zentrierrohr (6) mit einem Federelement (38) versehen ist, das sich bei geschlossener Kupplung (1) zwischen dem Zentrierrohr und dem anderen Kupplungsteil (3) abstützt, **dadurch gekennzeichnet, dass** die Betätigungsvorrichtung (14, 15) Kurven (18a, 18b) aufweist, die in Wirkverbindung mit dem Gegenlager (43) bringbar sind, derart, dass beim Schließen der Kupplung und beim über dessen Umfang im anderen Kupplungsteil (3) radial spielarm gelagerten Zentrierrohr (6) das Gegenlager (43) durch mindestens eine Kurve (18a) derart geführt ist, dass sich die Kupplungsteile (2, 3) in axialer Richtung der Kupplung annähern, bis sie sich in ihrer Schließposition befinden, und dass beim Öffnen der Kupplung das Gegenlager (4) durch mindestens eine andere Kurve (18b) derart geführt ist, dass sich die Kupplungsteile (2, 3) in axialer Richtung der Kupplung voneinander Beabstanden bis zu einer Position, in der das Gegenlager (43) und die Kurven (18a, 18b) außer Wirkverbindung bringbar sind.

2. Kupplung nach Anspruch 1, wobei die Betätigungsvorrichtung (14, 15) zwei Kurvenscheiben (14, 15) aufweist, die auf gegenüberliegenden Seiten des einen Kupplungsteils (2) angeordnet und in einer gemeinsamen Welle (13) drehfest gelagert sind, wobei die Welle (13) das eine Kupplungsteil (2) durchsetzt, sowie das in Wirkverbindung mit der jeweiligen Kurvenscheibe (14, 15) bringbare Gegenlager (43) als Rolle (43) ausgebildet ist, die in eine durch die Kurven (18a, 18b) radial begrenzte Kurvennut (16) eingreift.

3. Kupplung nach Anspruch 1 oder 2, wobei das Gegenlager (43) als Rolle (43) ausgebildet ist, deren Durchmesser geringfügig geringer ist als der Abstand der beiden Kurven (18a, 18b).

4. Kupplung nach einem der Ansprüche 1 bis 3, wobei sich die Kurve (18) über einen Schwenkwinkel von mehr als 135° erstreckt.

5. Kupplung nach einem der Ansprüche 1 bis 4, wobei in der gekuppelten Stellung der beiden Kupplungsteile (2, 3) das jeweilige Gegenlager (43) einen Hinterschnitt (21) der Kurve (18) kontaktiert.

6. Kupplung nach einem der Ansprüche 2 bis 5, wobei mit einer Kurvenscheibe (15) ein radial angeordneter Betätigungsgriff (23) verbunden ist.

7. Kupplung nach einem der Ansprüche 1 bis 6, wobei die Zentrierung des Zentrierrohres (6) im anderen Kupplungsteil (3) mittels mindestens im vorderen und hinteren Bereich des Zentrierrohres (6) wirsamer Zentrierringe (52, 53) erfolgt.

8. Kupplung nach Anspruch 7, wobei in die Ausnehmung (5) des anderen Kupplungsteils (3) in Abstand zwei Zentrierringe (52, 53) eingesetzt sind.

9. Kupplung nach einem der Ansprüche 1 bis 8, wobei das Federelement (38) als elastisches Bauteil (38), Tellerfeder oder fluidbetätigbarer Kolben ausgebildet ist.

10. Kupplung nach einem der Ansprüche 1 bis 9, wobei das Federelement (38) als elastisches Bauteil ausgebildet ist, das im Bereich des freien Endes des Zentrierrohres (6) gelagert ist, wobei das in Wirkverbindung mit dem anderen Kupplungsteil (3) bringbare Ende des Federelementes (38) konisch verjüngend ausgebildet ist.

11. Kupplung nach einem der Ansprüche 1 bis 10, wobei jedes Kupplungsteil (2, 3) einen Kupplungsflansch (25, 41) aufweist.

12. Kupplung nach Anspruch 11, wobei der Kupplungsflansch (41) des einen Kupplungsteils (3) der Aufnahme eines oder mehrerer Zentrierstifte (45) dient, die beim Verbinden der beiden Kupplungsteile (2, 3) in Ausnehmungen (37) des Kupplungsflansches (25) des anderen Kupplungsteils (2) eingreifen.

13. Kupplung nach Anspruch 11 oder 12, wobei der Kupplungsflansch (41) des einen Kupplungsteiles (3) der Aufnahme eines oder mehrerer Fluidanschlüsse, insbesondere Druckluftanschlüsse (48) dient, die beim Verbinden der beiden Kupplungsteile (2, 3) in Wirkverbindung mit komplementären Anschlußelementen (29) bringbar sind, die mit dem Kupplungsflansch (25) des anderen Kupplungsteiles (2) verbunden sind.

14. Kupplung nach einem der Ansprüche 11 bis 13, wobei der Kupplungsflansch (41) des einen Kupplungsteils (3) der Aufnahme eines oder mehrerer Elektroanschlüsse (51) dient, die beim Verbinden der beiden Kupplungsteile (2, 3) in Wirkverbindung mit komplementären Anschlußelementen (34) bringbar sind, die mit dem Kupplungsflansch (25) des anderen Kupplungsteiles (2) verbunden sind.

15. Kupplung nach einem der Ansprüche 1 bis 14, wobei die Betätigungsvorrichtung (14, 15) und/oder das Zentrierrohr (6) mit dem roboterseitigen Kupplungsteil (2) verbunden sind.

16. Kupplung nach einem der Ansprüche 1 bis 15, wobei das werkzeugseitige Kupplungsteil (3) eine Spannvorrichtung (54, 57) zum Verbinden eines Tragrohres (55) mit diesem Kupplungsteil (3) aufweist.

## Claims

1. A quick-change coupling (1) for a robot, comprising an integrated lead-through for media, wherein the coupling (1) comprises a coupling part (2) on the robot side and a coupling part (3) on the tool side which can be connected to each other, and wherein one of the coupling parts (2) is provided with a centring tube (6) which can be inserted in a recess (5) in the other coupling part (3), and additionally comprising an operating device (14, 15) for operating the coupling (1), wherein the operating device (14, 15) is mounted in one of the coupling parts (2) and can be brought into active communication with at least one thrust bearing (43) which is attached to the other coupling part (3), and wherein the centring tube (6) is provided with a spring element (38) which when the coupling (1) is engaged is supported between the centring tube and the other coupling part (3), **characterised in that** the operating device (14, 15) comprises cams (18a, 18b) which can be brought into active communication with the thrust bearing (43) so that when the coupling is engaged and when the centring tube (6) is radially mounted, with a low degree of radial clearance over the periphery of the coupling, in the other coupling part (3) the thrust bearing (43) is guided by at least one cam (18a) so that the coupling parts (2, 3) approach each other in the axial direction of the coupling until they are situated in their position of engagement, and that when the coupling is disengaged the thrust bearing (4) is guided by at least one other cam (18b) so that the coupling parts (2, 3) move apart from each other in the axial direction of the coupling as far as a position in which the thrust bearing (43) and the cams (88, 18b) can be brought out of active communication.

2. A coupling according to claim 1, wherein the operating device (14, 15) comprises two cam discs (14, 15) which are disposed on opposite sides of one coupling part (2) and are mounted fixed in rotation on a common shaft (13), wherein the shaft (13) passes through said one coupling part (2), and the thrust bearing (43), which can be brought into active communication with the respective cam disc (14, 15), is formed as a roller (43) which engages in a cam slot (16) which is radially delimited by the cams (18a, 18b).

3. A coupling according to claims 1 or 2, wherein the thrust bearing (43) is formed as a roller (43), the diameter of which is slightly less than the spacing between the two cams (18a, 18b).

4. A coupling according to any one of claims 1 to 3, wherein the cam (18) extends over a swivelling angle of more than 135°.

5. A coupling according to any one of claims 1 to 4, wherein the respective thrust bearing (43) contacts an undercut (21) in the cam (18) when the two coupling parts (2, 3) are in their engaged position.

6. A coupling according to any one of claims 2 to 5, wherein a radially disposed operating handle (23) is attached to one cam disc (15).

7. A coupling according to any one of claims 1 to 6, wherein centring of the centring tube (6) in the other coupling part (3) is effected by means of centring rings (52, 53) which are effective in the front and rear regions of the centring tube (6) at least.

8. A coupling according to claim 7, wherein two centring rings (52, 53) are inserted spaced apart in the recess (5) in the other coupling part (3).

9. A coupling according to any one of claims 1 to 8, wherein the spring element (38) is formed as an elastic component (38), a plate spring, or a fluid-operated piston.

10. A coupling according to any one of claims 1 to 9, wherein the spring element (38) is formed as an elastic component which is mounted in the region of the free end of the centring tube (6), wherein the end of the spring element (38) which can be brought into active communication with the other coupling part (3) is of tapered construction.

11. A coupling according to any one of claims 1 to 10, wherein each coupling part (2, 3) comprises a coupling flange (25, 41).

12. A coupling according to claim 11, wherein the coupling flange (41) of one coupling part (3) serves to receive one or more centring pins (45) which engage in recesses (37) in the coupling flange (25) of the other coupling part (2) when the two coupling parts (2, 3) are engaged.

13. A coupling according to claims 11 or 12, wherein the coupling flange (41) of one coupling part (3) serves to receive one or more fluid connections, particularly compressed air connections (48), which can be actively connected to complementary connection elements (29) which when the two coupling parts (2, 3) are engaged are connected to the coupling flange (25) of the other coupling part (2).

14. A coupling according to any one of claims 11 to 13, wherein the coupling flange (41) of one coupling part (3) serves to receive one or more electrical connections (51) which when the two coupling parts (2, 3) are engaged can be actively connected to complementary connection elements (34) which are attached to the coupling flange (25) of the other coupling part (2).

15. A coupling according to any one of claims 1 to 14, wherein the operating device (14, 15) and/or the centring tube (6) are attached to the coupling part (2) on the robot side.

16. A coupling according to any one of claims 1 to 15, wherein the coupling part (3) on the tool side comprises a clamping device (54, 57) for the attachment of a supporting tube (55) to said coupling part (3).

## Revendications

1. Accouplement à serrage rapide pour robot (1) du type à conduit pour fluide intégré, dans lequel l'accouplement (1) présente un élément d'accouplement (2) côté robot et un élément d'accouplement (3) côté outil, qui peuvent être reliés l'un à l'autre, un des éléments d'accouplement (2) étant muni d'un tube de centrage (6) qui peut venir s'enficher dans un évidement (5) de l'autre élément d'accouplement (3), et présentant en outre un dispositif d'actionnement (14, 15) pour actionner l'accouplement (1), le dispositif d'actionnement (14, 15) étant monté dans un des éléments accouplement (2) et pouvant être amené en liaison de travail avec au moins un palier supplémentaire (43) relié à l'autre élément d'accouplement (3), le tube de centrage (6) étant également muni d'un élément de ressort (38) qui s'appuie, lorsque l'accouplement (1) est fermé, entre le tube de centrage et l'autre élément d'accouplement (3), **caractérisé en ce que** le dispositif d'actionnement (14, 15) présente des courbes (18a, 18b) qui peuvent être amenées en liaison de travail avec le palier supplémentaire (43) de telle sorte que, lors de la fermeture de l'accouplement et lorsque le tube de centrage (6) est monté avec un jeu minimal en direction radiale autour de sa périphérie dans l'autre élément d'accouplement (3), le palier supplémentaire (43) est guidé par au moins une courbe (18a) de telle sorte que les éléments d'accouplement (2, 3) se rapprochent l'un de l'autre progressivement et en continu dans la direction axiale de l'accouplement jusqu'à ce qu'ils se retrouvent dans leur position de fermeture, et de telle sorte que lors de l'ouverture de l'accouplement, le palier supplémentaire (43) est guidé par au moins une autre courbe (18b) de telle sorte que les éléments d'accouplement (2, 3) s'écartent progressivement et en continu l'un de l'autre dans la direction axiale de l'accouplement jusqu'à une position dans laquelle le palier supplémentaire (43) et les courbes (18a, 18b) ne sont plus impliqués dans une liaison de travail.

2. Accouplement selon la revendication 1, dans lequel le dispositif d'actionnement (14, 15) présente deux cames (14, 15) qui sont disposées sur les côtés opposés du premier élément d'accouplement (2) et qui sont montées en antirotation dans un arbre commun (13), l'arbre (13) traversant un élément d'accouplement (2) et le palier supplémentaire (43) apte à entrer en liaison de travail avec la came respective (14, 15) étant réalisé en forme de galet (43) qui vient s'insérer dans une rainure courbe (16) délimitée en position radiale par les courbes (18a, 18b).

3. Accouplement selon la revendication 1 ou 2, dans lequel le palier supplémentaire (43) est réalisé sous la forme de galet (43) dont le diamètre est légèrement inférieur à la distance séparant les deux courbes (18a, 18b).

4. Accouplement selon l'une quelconque des revendications 1 à 3, dans lequel la courbe (18) s'étend en formant un angle de pivotement supérieur à 135 °.

5. Accouplement selon l'une quelconque des revendications 1 à 4, dans lequel, dans la position accouplée des deux éléments d'accouplement (2, 3), le palier supplémentaire respectif (43) entre en contact avec une contre-dépouille (21) de la courbe (18).

6. Accouplement selon l'une quelconque des revendications 2 à 5, dans lequel, une poignée de commande (23) disposée en direction radiale est reliée à une came (15).

7. Accouplement selon l'une quelconque des revendications 1 à 6, dans lequel le centrage du tube de centrage (6) dans l'autre élément d'accouplement (3) a lieu à l'aide d'anneaux de centrage (52, 53) qui agissent au moins dans la zone avant et arrière du tube de centrage (6).

8. Accouplement selon la revendication 7, dans lequel deux anneaux de centrage (52, 53) sont insérés à une certaine distance dans l'évidement (5) de l'autre élément d'accouplement (3).

9. Accouplement selon l'une quelconque des revendications 1 à 8, dans lequel l'élément de ressort (38) est réalisé sous la forme d'un composant élastique (38), d'un ressort à disques ou d'un piston qui peut être actionné par fluide.

10. Accouplement selon l'une quelconque des revendications 1 à 9, dans lequel l'élément de ressort (38) est réalisé sous la forme d'un composant élastique qui est monté dans la zone de l'extrémité libre du tube de centrage (6), l'extrémité de l'élément de ressort (38) apte à entrer en liaison de travail avec l'autre élément d'accouplement (3) étant réalisé en forme conique.

11. Accouplement selon l'une quelconque des revendications 1 à 10, dans lequel chaque élément d'accouplement (2, 3) présente une bride d'accouplement (25, 41).

12. Accouplement selon la revendication 11, dans lequel la bride d'accouplement (41) du premier élément d'accouplement (3) sert à recevoir une ou plusieurs broches de centrage (45) qui, lors de la liaison des deux éléments d'accouplement (2, 3), viennent s'insérer dans des évidements (37) de la bride d'accouplement (25) de l'autre élément d'accouplement (2).

13. Accouplement selon la revendication 11 ou 12, dans lequel la bride d'accouplement (41) du premier élément d'accouplement (3) sert à recevoir un ou plusieurs raccords pour fluide, en particulier des raccords (48) pour de l'air comprimé, qui, lors de la liaison des deux éléments d'accouplement (2, 3), peuvent entrer en liaison de travail avec des éléments de raccords complémentaires (29) qui sont reliés à la bride d'accouplement (25) de l'autre élément d'accouplement (2).

14. Accouplement selon l'une quelconque des revendications 11 à 13, dans lequel la bride d'accouplement (41) du premier élément d'accouplement 3 sert à recevoir un ou plusieurs raccords électroniques (51) qui, lors de la liaison des deux éléments d'accouplement (2, 3) peuvent entrer en liaison de travail avec des éléments de raccords complémentaires (34) qui sont reliés à la bride d'accouplement (25) de l'autre élément d'accouplement (2).

15. Accouplement selon l'une quelconque des revendications 1 à 14, dans lequel le dispositif d'actionnement (14, 15) et/ou le tube de centrage (6) sont reliés à l'élément d'accouplement (2) côté robot.

16. Accouplement selon une quelconque des revendications 1 à 15, dans lequel l'élément accouplement (3) côté outil présente un dispositif de serrage (54, 57) à des fins de liaison d'un tube de support (55) avec cet élément d'accouplement (3).
